# EUROPEAN PATENT APPLICATION

(11) **EP 4 663 312 A1**
(43) Date of publication of application: **17.12.2025**
(21) Application number: 24180969.8
(22) Date of filing: 10.06.2024
(51) Int. Cl.: B07B 13/18, G05B 13/04, G06Q 50/02, B07B 1/42

(54) **METHOD AND APPARATUS FOR OPERATING A SCREENING DEVICE**

(71) Applicant: Sandvik Rock Processing Australia Pty Limited, Sunshine, 3020 VIC (AU)
(72) Inventor: Mammadov, Asad, Beresfield, 2322 (AU); Hitchcock, Louise, Victoria (AU)
(74) Representative: Sandvik

(57) **Abstract**

Disclosed is a method (300) of operating a screening device (118) configured to carry out a screening process, the method comprising: obtaining input data indicative of the earth material process (S302), the input data representing at least one of a first type of information and a second type of information, the first type of information is indicative of operation of one or more of the set of devices (116, 118, 120) respectively arranged, relative the screening process, in one of an up-stream part and a down-stream part of the earth material process, the second type of information is indicative of earth material properties of the earth material respectively processed, relative the screening process, in one of an upstream part and a down-stream part of the earth material process; based on the input data, predicting (S304) one or more performance metrics of the screening process by performing one or more simulations using a digital twin (DT).

## Description

### TECHNICAL FIELD

The present disclosure pertains to the field of vibratory screening devices, in particular to apparatus and methods for operating such vibratory screening devices.

### BACKGROUND

Screening is a mission critical process part of mineral processing plants and is commonly used to either clean product or to separate ore material based on particle size. Screening process are resource intensive and employed in vastly different environments around the world. Whilst various solutions have been proposed in an attempt to alleviate its challenges, the design of these known solutions however commonly overlook an operational context of the screening process; oftentimes the screening process constituting a link in a chain of interrelated processes of an earth material process for subjecting earth material to processing, such as by comminution and screening. In application however, conditions can and will vary, changing the efficiency of the screen performance. In response to these issues, the applicant has devised solutions which address these drawbacks and which affords constructive contributions to the art.

### SUMMARY

Disclosed is a method of operating a screening device configured to carry out a screening process. The screening device is operatively coupled with a set of devices configured for subjecting earth material to an earth material process. The screening process of the earth material process is represented by a digital twin (DT). The method comprises: obtaining input data indicative of the earth material process. Optionally, the input data represents at least one of a first type of information and a second type of information. In one or more examples, the first type of information is indicative of operation of one or more of the set of devices respectively arranged, relative the screening process, in one of an up-stream part and a down-stream part of the earth material process. In one or more examples, the second type of information is indicative of earth material properties of the earth material respectively processed, relative the screening process, in one of an upstream part and a down-stream part of the earth material process. Optionally, the method comprises based on the input data, predicting one or more performance metrics of the screening process by performing one or more simulations using the DT. Optionally, the method comprises controlling the earth material process based on the prediction.

Also disclosed is an apparatus comprising at least one processor, and at least one memory including computer program code, the at least one memory and the computer program code configured to, with the at least one processor, cause the apparatus at least to perform the method according to embodiments disclosed herein.

Also disclosed is a screening device comprising an apparatus according to embodiments disclosed herein.

Also disclosed is a set of earth material processing devices comprising an apparatus according to embodiments disclosed herein.

Also disclosed is a computer readable storage medium storing one or more programs, the one or more programs comprising instructions, which when executed by an electronic device, such as the apparatus according to embodiments disclosed herein, cause the electronic device to perform any of the methods disclosed herein.

Also disclosed is a computer program comprising instructions for causing an apparatus according to embodiments disclosed herein to perform the methods disclosed herein.

In one aspect there is provided a computer-readable [storage] medium comprising instructions which, when executed by a computer, cause the computer to carry out [the operations of] the methods disclosed herein.

In one aspect there is provided a screening device control apparatus comprising at least one processor and at least one memory including computer program code, the at least one memory and the computer program code configured to, with the at least one processor, cause the apparatus at least to: perform the methods disclosed herein.

In one aspect there is provided a non-transitory computer readable medium comprising program instructions for causing an apparatus to perform the methods disclosed herein.

In one aspect there is provided a computer readable medium comprising program instructions for causing an apparatus according to embodiments disclosed herein to perform at least the method according to the methods disclosed herein.

The provision of such method and apparatus will solve or at least mitigate one or more of the problems or drawbacks identified in the background section of this document, as will be clear from the following detailed description section and the drawings. As such, some embodiments may improve a performance of the earth material process, e.g. in terms of particle size distribution, energy consumption, velocity, etc. Additionally, some embodiments may enable devices to be adjusted proactively in response to changes in the operational context.

Hence, some embodiments will enable assistance of a user of the screening device to perform the technical task of operating devices the earth material process. As such, some embodiments may enable the user of the screening device to improve its effectiveness, such as by communicating the dynamic internal state of the screening device. Furthermore, some embodiments may assist the user in performing the technical task of operating the screening device.

### BRIEF DESCRIPTION OF DRAWINGS

Example embodiments will be described in more detail to the following figures, in which:
FIG. 1 is a schematic illustration of the screening device according to some embodiments.
FIG. 2 is schematic illustration of the earth material process according to some embodiments.
FIG. 3 is a flow diagram of operations of the apparatus according to some embodiments.
FIG. 4 is a block diagram of the apparatus according to some embodiments.

### DETAILED DESCRIPTION

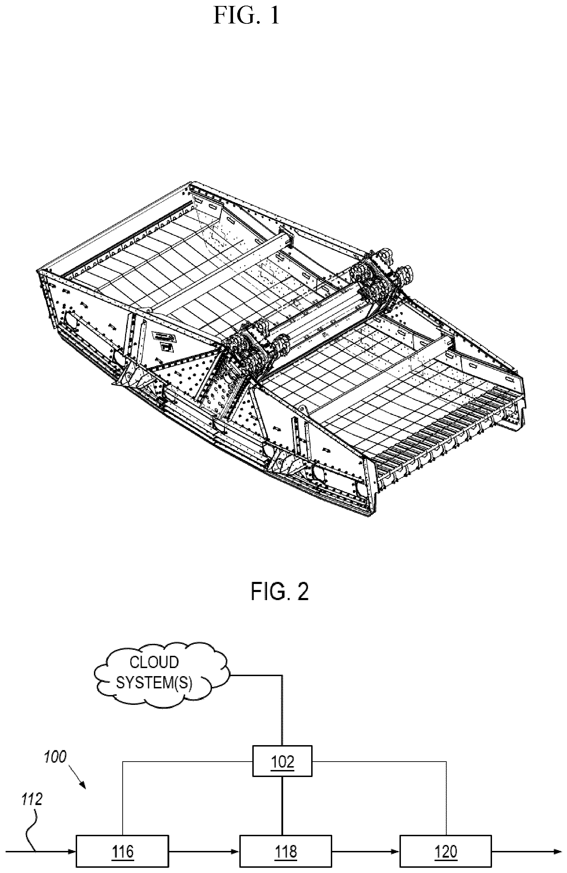

Referring now to **FIG. 1****,** an example screening device 118 with which embodiments can be deployed is shown. Screening device 118 generally comprises at least one screen 158 extending between an inlet end for receiving feed material, e.g. earth material, to be processed, and a discharge end for discharging one or more screened products. The earth material subject to processing in the screening process is conveyed over the screen 158 through excitation. The earth material forms on the screen 158 a bed having a bed depth generally extending normal to a screen upper surface. Excitation of the material is realized through at least one exciter comprising a motor. The exciter(s) displaces the screen 158 along a stroke line having respective components in a machine direction x of the device 118 and in a vertical direction y.

The screening device 118 is configured to separate an oversize product, such as a coarse product, from the material flow through the excitation. The separation is facilitated by means of the screen 158 comprising openings (not shown) sized and configured to capture the oversize product while allowing a fines product of particles of the material to fall through the openings under the action of gravity. The screening device 118 may comprise several screens 158, such as stacked on top of each other, for example for separating a second oversize product.

With added reference to **FIG. 2****,** an exemplary arrangement of consecutively arranged devices for processing earth material is shown, wherein arrows schematically illustrate a flow of earth material 112. In other words, FIG. 2 shows an earth material process 100 for processing earth material in a flow 112. A first device 116 may by way of example represent an up-stream device 116, for example a primary crusher for comminution of earth material, a second device 118 may represent the screening device and a third device 120 may represent a down-stream device 120, such as a secondary screening device. As schematically illustrated, one or more of the devices 116, 118, 120 may be communicatively coupled to an apparatus 102 according to embodiments disclosed herein. In some embodiments, one or more of the devices 116, 118, 120 may be provided with loT functionality, e.g. for collecting and/or controlling any part of the processing of the flow of earth material, optionally via the apparatus 102. The flow of earth material may be continuously processed and/or intermittently processed where for example other devices and/or processes may be involved at any point and/or between any devices illustrated in FIG. 2.

Examples of the aforementioned set of performance metrics may comprise any or all of the performance metrics discussed in the below, without limitation.

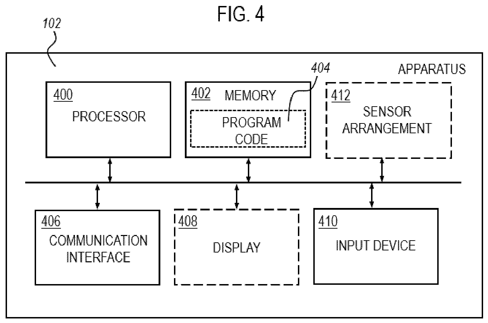

Particle size distribution (PSD) is a performance metric indicative of a distribution of particles according to their size, such as in a sample. The PSD can be monitored by the screening device and/or the apparatus via sensor data, e.g. from one or more cameras associated with the processing of the flow of earth material. Determining PSD may comprise applying optical granulometry analysis to image data captured by a camera associated with the screening device and/or the apparatus. Embodiments of a sensor arrangement (e.g. sensor arrangement 412 of FIG. 4) may for this purpose comprise an optical camera, for example an RGB camera and/or any other suitable cameras.

Feed Rate over screen is a performance metric indicative of a mass flow rate of material over a screen deck of the screening device. The feed rate over screen can be monitored by the screening device and/or the apparatus via sensor data, e.g. from one or more cameras associated with the processing of the flow of earth material. Determining feed rate over screen may comprise applying optical particle tracking analysis to image data captured by an optical camera.

Process efficiency is a performance metric indicative of the proportion of fines that are separated from the oversized material. The process efficiency can be monitored by the screening device and/or the apparatus via sensor data, e.g. from one or more cameras associated with the processing of the flow of earth material. Determining process efficiency may comprise applying optical granulometry analysis to image data captured by a camera to measure the particle size distribution. By measuring and comparing the particle size distribution at both the feed and discharge ends of the screening device the processing efficiency may be determined. In addition, by this process, the coarse contamination in the fines may also be determined.

Material Velocity across screen is a performance metric indicative of an average particle velocity over the screen at discharge end 124 and feed end 126. The Material Velocity can be monitored by the screening device and/or the apparatus via sensor data, e.g. from one or more cameras associated with the processing of the flow of earth material. The material velocity may comprise a velocity of the particles as they traverse the screen. Determining material velocity across screen 158 may comprise processing image data captured by an RGB camera by applying particle tracking velocimetry (PTV) analysis.

Moisture Content (MC) is a performance metric indicative of moisture content of the material. The MC can be monitored by the screening device and/or the apparatus via sensor data, e.g. from one or more sensors associated with the processing of the flow of earth material. Moisture content may comprise a mass proportion of residual water to the dry bulk material. In some embodiments the sensor arrangement determines moisture content by one or more of a capacitive moisture sensor and a NIR (near infrared) moisture sensor.

Live Modal Analysis is a performance metric that may comprise real time modal analysis whilst the screening device is operating and that is indicative of dynamic behaviour of mechanical structures of the screening device 118 as a function of excitation frequency. Live modal analysis may in some embodiments of the sensor arrangement be determined by means of at least one accelerometer.

Particle Shape Factor is a performance metric indicative of the shape of a particle, such as a particle of a material being processed or to be processed in the screening device. The Particle Shape Factor can be monitored by the screening device and/or the apparatus via sensor data, e.g. from one or more cameras associated with the processing of the flow of earth material. Determining particle shape factor may comprise processing image data captured by an RGB camera by to identify shape characteristics of a particle. Typical shape factors identified may include aspect ratio, circularity, convexity, roughness, and solidity.

Feed Bias is a performance metric indicative of lateral mass distribution across the screen deck. The Feed Bias can be monitored by the screening device and/or the apparatus via sensor data, e.g. from one or more cameras associated with the processing of the flow of earth material. Determining Feed Bias may comprise the use of accelerometers, RGB cameras, stereo cameras, structured light sensor, or Time of Flight (ToF) cameras.

Bed Depth is a performance metric indicative of a height profile of material across the face of the screen. The Bed Depth can be monitored by the screening device and/or the apparatus via sensor data, e.g. from one or more cameras associated with the processing of the flow of earth material. Determining bed depth may comprise measuring the bed depth by means of a 3D imaging sensor.

Motor Power is a performance metric indicative of voltage and current draw of the exciter motors. The sensor arrangement (e.g. sensor arrangement 412 of FIG. 4) may thus in some embodiments comprise a voltage sensor and a current sensor.

Stroke parameters may include performance metrics indicative of one or more of stroke angle, stroke shape and stroke length. The stroke parameters represent the dynamic motion of the screen and may in some embodiments be determined by means of accelerometers.

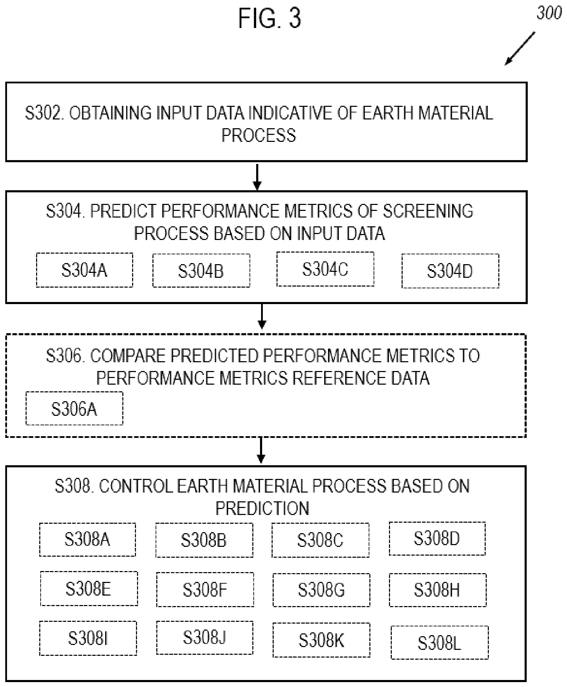

Referring now to **FIG. 3****,** there is shown a flow diagram of a method 300 of operating (such as monitoring, controlling, predicting) a screening device disclosed herein configured to carry out a screening process, such as screening device 118 of FIGs. 1 and 2. As illustrated in FIG. 2, the screening device 118 may be operatively coupled with a set of devices 116, 118, 120 according to embodiments configured for subjecting earth material to the earth material process 100. The earth material process may comprise the screening process, such as for filtering, sieving, monitoring, sorting particles of the earth material. The screening process of the earth material process is represented by a digital twin (DT). The method 300 may extend to operating one or more of the set of devices, such as devices 116, 118, 120 of FIG. 2.

A DT may be seen as a representation of a process and/or a device in a digital system, such as a virtual system and/or a simulation and/or an emulation. The DT may comprise one or more DTs. By way of example, the DT may comprise a screening DT representing the screening process. An upstream process and/or device (such as upstream device 116) may be represented by an upstream DT, for example a crusher DT for the crushing process. Likewise, a down-stream process or device (such as down-stream device 120 of FIG. 2) may be represented by a downstream DT, for example a second screening DT representing a second screening device and/or a conveyor DT representing a conveyor device.

The method may be performed by a screening device and/or an apparatus, e.g. screening device 118 of FIG. 2 and/or apparatus 102 of FIGs. 2 and 4. The method 300 may be a computer-implemented method.

At S302 the method may comprise obtaining (e.g. receiving and/or retrieving) input data indicative of the earth material process. In one or more example methods, the input data can be obtained from one or more sensors and/or loT device from up-stream and/or down-stream part of the screening process, and/or user input, and/or from one or more data repository (such as a database, and/or a server memory). In some embodiments the input data may comprise data relating to operation of the screening device, such as screen characteristics and/or operating parameters, such as screen shape and size, stroke angle, G-force, modal shapes and/or frequencies, screen media type, shape, aperture size and aperture shape, exciter RPM, water spray flow rates and spray bar locations, exciter oil quality, exciter vibration, exciter temperature, vibration sensors on screen, strain gauges on screen, screen media condition.

In one or more example methods, the input data represents a first type of information. In one or more example methods, the input data represents a second type of information. The first type of information may be indicative of operation of one or more of the set of devices 116, 120 respectively arranged, relative the screening process, in one of an up-stream part and a down-stream part of the earth material process. In one or more example methods, the input data represents the first type of information and the second type of information. For example, the first type of information is indicative of operation of one or more of the set of devices 116, 120 respectively arranged, relative the screening process, in an up-stream part and/or a down-stream part of the earth material process.

The second type of information may be indicative of earth material properties of the earth material respectively processed, relative the screening process, in one of an upstream part and a down-stream part of the earth material process. For example, the second type of information is indicative of earth material properties of the earth material respectively processed, relative the screening process, in an upstream part and/or a down-stream part of the earth material process.

At S304, the method 300 may comprise, based on the input data, predicting, for example by applying one or more prediction technique to the input data, one or more performance metrics of the screening process by performing, such as by performing one or more simulation using the DT, and/or by applying a machine learning (ML) model disclosed herein. The one or more simulations using the DT may be performed, e.g. by a DT configured to simulate operations of the screening device based on the input data, and optionally to provide one or more performance metrics.

At S306, the method 300 may comprise comparing the predicted performance metric(s) to performance metric(s) reference data. In one or more example methods, comparing S306 the predicted performance metric(s) to the performance metric(s) reference data comprises providing S306A an indication of a result of the comparison, such as for the control earth material process.

In some embodiments, performance metric(s) reference data may comprise actual performance metrics from the screening device. For example, identification of a potential improvement of one or more performance metric(s) may be facilitated. For example, by comparing predicted performance metric(s) to the actual performance metrics, feedback to the DT based on the indication of the result of the comparison may facilitate tuning of the DT to provide improved predictions. For example, the method may comprise updating the DT based on the indication of the result.

In some embodiments, performance metric(s) reference data may comprise stored predictions, such as previously predicted performance metric(s), such as stored in a database and/or a repository of historical performance metrics. In one or more examples, the performance metric reference data may be obtained from a memory of the apparatus disclosed herein, and/or a cloud-based solution, such as a database and/or a repository of historical performance metrics. For example, the method may comprise performing a plurality of simulations and comparison between the plurality of simulations e.g. for facilitating optimization of operation of the screening device. In some examples, the simulated performance metric(s) may be stored as part of the performance metric(s) reference data.

In some embodiments, the performance metric(s) reference data may comprise ranges of performance metrics, such as suitable ranges. For example, a user may thereby be informed on a performance of the screening process in relation to a range of performance. Alternatively, or in addition, the earth material process may be controlled towards operation in a selected range of one or more performance metric.

In some embodiments, the performance metric(s) reference data may comprise rated efficiencies. For example, a user may thereby be informed on a performance of the screening process in relation to a rated efficiency. Alternatively, or in addition, the earth material process may be controlled towards operation at a rated efficiency.

In some embodiments, performing the one or more simulations using the DT, e.g. configured to simulate operations of the screening device based on the input data, and optionally to provide one or more performance metrics, may comprise simulating operations of the screening device using the DT based on a set of variable process parameters of the earth material process. By way of example, simulating operations may comprise performing a plurality of simulations for different values of one or more sets of process parameters. Put differently, a respective simulation of the plurality of simulations simulating operation based on a respective set of values of a range of values of one or more sets of process parameters. The predicted performance metrics may be stored in a memory according to embodiments. Thus, comparing S306 the predicted performance metric(s) to performance metric(s) reference data may comprise comparing respective simulated performance metrics of the plurality of simulations, such as by obtaining stored predictions from memory, and providing an indication of the result of the comparison.

At S308 the method may comprise controlling the earth material process based on the prediction. Controlling S308 the earth material process may comprise controlling operation of the screening device.

In some embodiments controlling S308 the operation of the screening device based on the prediction may comprise identifying S308A (such as determine, predict, and/or generate) one or more process parameters based on the prediction. For example, the process parameters may be identified by the indication of a result of the comparison (e.g from S306A) indicating process parameters associated with an optimum and/or improved performance. Assistance to a user performing the technical task of operating the screening device may thereby be facilitated.

In some embodiments, the controlling S308 may comprise displaying S308B information indicative of the identified process parameters on a display (e.g. of the screening device and/or apparatus disclosed herein) according to embodiments. For example, assistance to a user performing the technical task of operating the screening device may thereby be facilitated.

In some embodiments the controlling S308 may comprise controlling S308C, based on the prediction S304, operation of the screening device and/or of the one or more of the set of devices (e.g. devices 116, 120 of FIG. 2) respectively arranged in one of an up-stream part and a down-stream part of the screening process.

In some embodiments the controlling S306 may comprise controlling S308D, based on the identified process parameters in S308A, operation of the screening device (e.g. screening device 118 of FIGs. 1 and 2) and/or of the one or more of the set of devices (e.g. devices 116, 120 of FIG. 2) respectively arranged in one of an up-stream part and a down-stream part of the earth material process. For example, assistance to a user performing the technical task of operating the one or more of the set of devices (e.g. devices 116, 120 of FIG. 2) may be facilitated.

In some embodiments, the method 300 comprises providing S308E an indication of the prediction, e.g. to a further process, and/or to an external device, and/or to any devices in the up-stream and/or downstream part, and/or to the screening device and/or to a user.

In some embodiments, controlling S308 the earth material process comprises initiating S308F an adjustment process for adjusting an operation of the screening device based on the indication of the prediction (e.g. of step S308E).

In some embodiments, controlling S308 the earth material process comprises adjusting S308G the operation of the screening device.

In some embodiments, controlling S308 earth material process comprises forgoing S308H (such as not triggering, not initiating, and/or not starting) the adjustment process for adjusting an operation of the screening device.

In some embodiments, controlling S308 the earth material process comprises forgoing S3081 (such as not triggering, not activating, and/or not starting) the initiation of the adjustment process for adjusting an operation of the screening device.

In some embodiments, controlling S308 the earth material process comprises displaying S308J one or more user interface objects representative of one or more of: the indication of the prediction (e.g. from S308G) and/or information indicative of process parameters according to embodiments, for example recommendations relating to process parameters according to embodiments, an indication of a prediction according to embodiments, a result of a comparison and/or an indication of the result of the comparison (e.g. from S306A) according to embodiments, and at least one performance metric of the set of performance metrics.

In some embodiments, controlling S308 the adjustment process for adjusting an operation of the screening device comprises communicating S308K a signal indicative of a control of the adjustment process (such as to a sensor and/or an actuator associated with the screening device).

In some embodiments, controlling S308 the adjustment process for adjusting an operation of the screening device comprises controlling S308L one or more process parameters, e.g. to one or more of a set of controllable screen control parameters and/or other suitable parameters. In some embodiments, the set of screen control parameters includes one or more of a process water spraying parameter, a motor speed parameter of an exciter of the screening device, a feed speed parameter of the screening device, a particle size parameter and/or a shape parameter of the feed material, a stroke shape parameter of the screening device, and stroke angle parameter of the screening device.

Generally, process parameters may be seen as any process parameter relating to operation and/or earth material of the earth material process. The set of process parameters may include one or more of the screen control parameters as explained hereinbefore. Alternatively, or in addition, process parameters may include one or more of the first type of information and the second type of information. For example, the process parameters may include first type information and second type information.

In some embodiments, the predicting S304 one or more performance metrics of the screening process may comprise applying S304A a machine learning model to the input data, and/or to the predicted performance metrics.

In some embodiments the machine learning model may be configured to provide one or more predicted performance metrics and/or one or more process parameters based on the input data, and/or based on the predicted performance metrics. Assistance to a user performing the technical task of operating the screening device may thereby be facilitated.

The machine learning model may be updated based on a result of a comparison of one or more actual performance metric(s) and corresponding predicted performance metric(s) predicted by the machine learning model. In other words, the machine learning model may be updated and/or retrained based on a feedback loop providing the output of the machine learning model, e.g. the predictions. In other words, the machine learning model may be updated and/or retrained based on a feedback loop providing the output of the simulation and/or emulation by the DT.

In some embodiments the machine learning model may be trained based on a training dataset, representing one or more of; historical input data and one or more ranges of process parameters of the set and historical output data representing performance metrics of the screening process.

That is, the training data may comprise historical and/or real-time input data, historical and/or real-time performance metrics, historical and/or real-time screen control parameters, historical and/or real-time process parameters, and historical and/or real-time results of comparisons according to embodiments. The training data may be labelled as input data or output data respectively.

The training may be conducted using a semi-supervised learning environment, where some elements of the training data may be manually labelled, and other elements may be unlabelled or labelled through automated tools.

In some embodiments, the machine learning model comprises one or more of: a neural network, decision tree, support vector machine, genetic algorithms, k-means, kernel regression and discriminant analysis and any other tool appropriately configured for the intended purpose outlined herein or combinations thereof.

In some embodiments, the machine learning model is configured to optimize on a performance metric of the screening device by training the machine learning model to solve an optimization problem based on a predetermined set of performance metrics and results. For example, the optimization problem to be solved by the machine learning model may be an optimization problem with discrete variables, such as a discrete optimization, in which future input data is to be generated from a countable set. For example, the optimization problem to be solved by the machine learning model may be an optimization problem with continuous variables such as a continuous optimization, in which an optimal value for e.g. a process parameters, such as screen control parameters associated with predicted performance metric(s) from a continuous function is to be found. For example, the optimization problem to be solved by the machine learning model may include constrained problems (where there exist a constraint on one or more performance metrics) and/or multimodal problems. Assistance to a user in the technical task of operating the screening device may thereby be facilitated.

In some embodiments the predicting S304 the one or more performance metrics may comprise obtaining S304B simulation input data, e.g. including varying first and/or second type of information, such as including a range of first and/or second type of information. In some embodiments the predicting S304 the one or more performance metrics may comprise simulating S304C, by the digital twin, one or more performance metrics based on the simulation input data. In some embodiments the predicting S304 the one or more performance metrics may comprise applying S304D the machine learning model to the simulation input data and the one or more performance metrics.

For example, by simulating S304C one or more performance metrics based on the simulation input data, the DT may be used to provide training data for the machine learning model, whereby, for example, improved predictions may be facilitated.

The simulation input data may be provided in the simulation environment. For example, simulation input data is configured/selected by user input from a user. The simulation input data may include varying first and/or second type of information, such as over a range of first and/or second type of information.

In some embodiments, the first type of information may be indicative of one or more of devices (e.g. devices 116, 118, 120 of FIG.2) characteristics and/or device parameters (e.g. of devices 116, 118, 120 of FIG.2), such as motor power, feeder or conveyor belt speed, water spray flow rates, feed bin gate positions, material sensors, operating characteristics, and parameters characterizing material processing requirements of the device, such as screening efficiency, material cut size (max size), particle size distribution, moisture content, material discharge speed, material types, material compositions.

The first type of information may be obtained by means of sensors, such as sensor arrangement 412 of FIG. 4 and/or by user input, such as via input device 410 of FIG. 4, and/or from a memory accessible by the apparatus, such as memory 402 of FIG. 4.

In some embodiments the second type of information may be indicative of one or more of particle size distribution, moisture content, particle shape factor, material types and compositions, material characteristics (which can be seen as material properties), such as screening efficiency, material cut size (max size), particle size distribution, moisture content, material discharge speed, and material types and/or compositions.

The second type of information may be indicative of actual earth material properties of earth material, such as earth material 112 of FIG. 2. The second type of information may be obtained by means of sensors, such as sensor arrangement 412 of FIG. 4 and/or by user input, such as via input device 410 of FIG. 4, and/or from a memory accessible by the apparatus, such as memory 402 of FIG. 4.

In some embodiments the set of performance metrics may comprise one or more of particle size distribution on screen, feed conditions over screen, process efficiency, material velocity across screen, moisture content, predicted modal analysis, particle shape factor on screen, bed depth, feed bias, particle size distribution bias, motor power, stroke angle, stroke shape, stroke length, and oil quality and condition.

In some embodiments, any one or more of the above actions may be performed continuously or periodically. In some embodiments, any one or more of the above operations S302, S304A, S304B, S304C, S304D, S306, S306A, S308, S308A, S308B, S308C, S308D, S308E, S308F, S308G, S308H, S308I, S308J, S308K, S308L may involve one or more real-time, or near to real-time conditions. Furthermore, it is to be noted that the previously described flow diagrams, unless the description clearly indicates a certain relationship between two or more operations, the described operations may be performed in a different sequence than the one illustrated. For example, two operations shown performed in succession may be performed substantially concurrently, or even in the reverse order. Hence, the illustrated sequence of operations is only indicative of one particular sequence of actions and does not suggest that this is the only possible sequence.

**FIG. 4** illustrates an example of an apparatus 102 configured to practice one or more example embodiments. The apparatus 102 may comprise, for example, a server, a controller workstation, a mobile communications device, a vehicle on-board control device, or other kind of appropriately configured data processing device configured to implement functionality described herein. Although the apparatus 102 is illustrated as a single device, it is appreciated that, wherever applicable, functions of the apparatus 102 may be distributed to a plurality of devices.

The apparatus 102 may be comprised in the screening device 118 but may alternatively, or in addition be comprised in any other suitable location such as e.g., in cloud system(s) at a remote location.

The apparatus 102 may comprise a sensor arrangement 412 comprising set of sensors e.g. according to embodiments disclosed herein, arranged and adapted to monitor operation of the earth material process. The sensor arrangement 412 may be configured to monitor one or more process parameters according to embodiments and one or more of the set of performance metrics of the earth material process. As used herein, a "sensor" is a device that measures physical input from its environment and converts it into data that can be interpreted by either a human or a machine.

The apparatus 102 may comprise at least one processor 400. The at least one processor 400 may comprise, for example, one or more of various processing devices or processor circuitry, such as, for example, a co-processor, a microprocessor, a controller, a Digital Signal Processor (DSP), a processing circuitry with or without an accompanying DSP, or various other processing devices including integrated circuits such as, for example, an Application Specific Integrated Circuit (ASIC), a Field Programmable Gate Array (FPGA), a Microcontroller Unit (MCU), a hardware accelerator, a special-purpose computer chip, or the like.

The apparatus 102 may further comprise at least one memory 402. The at least one memory 402 may be configured to store, for example, computer program code or the like, for example, operating system software and application software, and mining vehicle reference performance data and deviation data associated with an operator of a mining vehicle. The at least one memory 402 may comprise one or more volatile memory devices, one or more non-volatile memory devices, and/or a combination thereof. For example, the at least one memory 402 may be embodied as storage devices (such as hard disk drives, solid state drives, magnetic tapes, etc.), optical magnetic storage devices, or semiconductor memories (such as mask ROM, PROM (programmable ROM), EPROM (erasable PROM), flash ROM, RAM (random access memory), etc.).

The apparatus 102 may further comprise a communication interface 406 configured to enable the apparatus 102 to transmit and/or receive information to/from other devices, for example, the cloud system 106. In one example, the apparatus 102 may use the communication interface 406 to transmit or receive signaling information and data in accordance with at least one data communication or cellular communication protocol. The communication interface 406 may be configured to provide at least one wireless radio, such as, for example, a 3GPP mobile broadband connection (e.g., 3G, 4G, 5G, 6G, etc.), or a wired connection.

The apparatus 102 may further comprise a display 408 or an interface to which a display can be connected to. The apparatus 102 may further comprise an input device 410, for example, a keyboard, a mouse etc., for receiving user input.

The apparatus 102 may further comprise the sensor arrangement 412 according to embodiments described hereinbefore.

The apparatus 102 is configured to obtain (e.g., via memory 402 and/or interface 406) indicative of the earth material process. The input data represents for example at least one of a first type of information and a second type of information,

In one or more example apparatuses, the first type of information is indicative of operation of one or more of the set of devices respectively arranged one of up-stream and down-stream part of the screening process.

In one or more example apparatuses, the second type of information is indicative of earth material properties of the earth material respectively processed in one of upstream and down-stream part of the screening process.

The apparatus 102 is configured to predict (e.g., via the processor 400), based on the input data, one or more performance metrics of the screening process by performing one or more simulations using the DT.

The apparatus 102 is configured to control (e.g., via processor 400) the earth material process based on the prediction.

The processor 400 is optionally configured to perform any of the operations disclosed in FIG. 3 (such as any one or more of: S302, S304A, S304B, S304C, S304D, S306, S306A, S308, S308A, S308B, S308C, S308D, S308E, S308F, S308G, S308H, S308I, S308J, S308K, S308L). The operations of the apparatus 102 may be embodied in the form of executable logic routines (e.g., lines of code, software programs, etc.) that are stored on a non-transitory computer readable medium (e.g., the memory 402) and are executed by the processor 400).

Furthermore, the operations of the apparatus 102 may be considered a method that the apparatus 102 is configured to carry out. Also, while the described functions and operations may be implemented in software, such functionality may as well be carried out via dedicated hardware or firmware, or some combination of hardware, firmware and/or software.

The memory 402 may be one or more of a buffer, a flash memory, a hard drive, a removable media, a volatile memory, a non-volatile memory, a random access memory (RAM), or other suitable device. In a typical arrangement, the memory 402 may include a non-volatile memory for long term data storage and a volatile memory that functions as system memory for the processor 400. The memory 402 may exchange data with the processor 400 over a data bus. Control lines and an address bus between the memory 402 and the processor 400 also may be present (not shown in FIG. 4). The memory 402 is considered a non-transitory computer readable medium.

When the apparatus 102 is configured to implement some functionality, some component and/or components of the apparatus 102, for example, the at least one processor 400 and/or the at least one memory 402, may be configured to implement this functionality. Furthermore, when the at least one processor 400 is configured to implement some functionality, this functionality may be implemented using the program code 404 comprised, for example, in the at least one memory 402.

The functionality described herein may be performed, at least in part, by one or more computer program product components such as software components. According to an embodiment, the apparatus may comprise a processor or processor circuitry, for example, a microcontroller, configured by the program code when executed to execute the embodiments of the operations and functionality described herein. The program code 404 is provided as an example of instructions which, when executed by the at least one processor 400, cause performance of apparatus. Alternatively, or in addition, the functionality described herein can be performed, at least in part, by one or more hardware logic components. For example, and without limitation, illustrative types of hardware logic components that can be used include Field-programmable Gate Arrays (FPGAs), Application-Specific Integrated Circuits (ASICs), Application-Specific Standard Products (ASSPs), System-on-a-chip systems (SOCs), Complex Programmable Logic Devices (CPLDs), and Graphics Processing Units (GPUs).

The apparatus 102 may be configured to perform or cause performance of any aspect of the method(s) described herein. Further, a computer program may comprise instructions for causing, when executed, an apparatus to perform any aspect of the method(s) described herein. The computer program may be stored on a computer-readable medium. Further, the apparatus 102 may comprise means for performing any aspect of the method(s) described herein. In one example, the means comprises the at least one processor 400, the at least one memory 402 including the program code 404 (instructions) configured to, when executed by the at least one processor 400, cause the apparatus 102 to perform the method(s). In general, computer program instructions may be executed on means providing generic processing functions. The method(s) may be thus computer-implemented, for example based algorithm(s) executable by the generic processing functions, an example of which is the at least one processor 400. The means may comprise transmission and/or reception means, for example one or more radio transmitters or receivers, which may be coupled or be configured to be coupled to one or more antennas, or transmitter(s) or receiver(s) of a wired communication interface.

The apparatus 102 may be configured to receive information continuously or discontinuously. Receiving information continuously may comprise, for example, receiving a flow of information such as near real-time measurement data. Receiving information discontinuously may comprise, for example, receiving information at set intervals or in response to a performed action.

Generally herein, expressions like "[entity] is configured for....[performing activity]" or "[entity] is configured to...[perform activity]" will include typical cases where a computerized entity (having one or more controllers, processing units, programmable circuitry, etc.) executes software or firmware installed in the computerized entity, wherein the execution occurs in order to perform the activity in question.

Throughout the specification and claims, the following terms take the meanings explicitly associated herein, unless the context clearly dictates otherwise:
The phrase "in one embodiment" as used herein does not necessarily refer to the same embodiment, though it may. Thus, as described below, various embodiments of the disclosure may be readily combined, without departing from the scope or spirit of the disclosure.

As used herein, the term "or" is an inclusive "or operator and is equivalent to the term "and/or," unless the context clearly dictates otherwise.

The term "based on" is not exclusive and allows for being based on additional factors not described unless the context clearly dictates otherwise.

The term "training" herein does not necessarily limit to a supervised, unsupervised or semi-supervised approach. Supervised machine learning is the machine learning task of inferring a function from supervised (labeled) training data. Unsupervised learning is the machine learning task of find hidden structure (function) in unlabeled data. Semi-supervised machine learning includes training with labeled and unlabeled data.

The term "screening process" as used herein may comprise the process of screening material occurring in a screening device.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual operations may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. A computer implemented method (300) of operating a screening device configured to carry out a screening process, wherein the screening device is operatively coupled with a set of devices (116, 118, 120) configured for subjecting earth material to an earth material process (100), and wherein the screening process of the earth material process is represented by a digital twin (DT), the method comprising:
- obtaining input data indicative of the earth material process (S302), the input data representing at least one of a first type of information and a second type of information,
wherein the first type of information is indicative of operation of one or more of the set of devices (116, 120) respectively arranged, relative the screening process, in one of an up-stream part and a down-stream part of the earth material process,
wherein the second type of information is indicative of earth material properties of the earth material respectively processed, relative the screening process, in one of an upstream part and a down-stream part of the earth material process;
- based on the input data, predicting (S304) one or more performance metrics of the screening process by performing one or more simulations using the DT; and
- controlling (S306) the earth material process based on the prediction.

2. The method according to any one of the preceding claims, further comprising
- comparing (S308) the predicted performance metric(s) to performance metric(s) reference data; and
- providing (S308A) an indication of a result of the comparison.

3. The method according to any of the preceding claims 1-2, wherein performing the one or more simulations using the DT comprises:
- simulating operations of the screening device using the DT based on a set of variable process parameters of the earth material process.

4. The method according to any of the preceding claims, wherein controlling (S306) the operation of the screening device based on the prediction comprises
- identifying (S306A) one or more process parameters based on the prediction.

5. The method according to any of the preceding claims 1-4, wherein predicting (S304) one or more performance metrics of the screening process comprises applying (S304A) a machine learning model to the input data, and/or to the predicted performance metrics.

6. The method according to claim 5, wherein the machine learning model is configured to provide one or more predicted performance metrics and/or one or more process parameters based on the input data, and/or to the predicted performance metrics.

7. The method according to any of claims 5-6, wherein the machine learning model is trained based on a training dataset, representing one or more of; historical input data and one or more variable process parameters of the set of process parameters, and historical output data representing performance metrics of the screening process.

8. The method according to any of claims 5-7, wherein predicting (S304) the one or more performance metrics comprises
- obtaining (S304B) simulation input data;
- simulating (S304C), by the digital twin, one or more performance metrics based on the simulation input data; and
- applying (S304D) the machine learning model to the simulation input data and the one or more performance metrics.

9. The method according to any of claims 4-8, wherein the controlling (S306) comprises displaying (S306B) information indicative of the identified process parameters on a display.

10. The method according to any of the preceding claims, wherein controlling (S306) comprises controlling (S306C), based on the prediction (S304), operation of the screening device (118) and/or of the one or more of the set of devices (116, 120) respectively arranged in one of an up-stream part and a down-stream part of the earth material process.

11. The method according to any of claims 4-10, wherein the controlling (S306) comprises controlling (S306D), based on the identified process parameters (S306A), operation of the screening device and/or of the one or more of the set of devices (116, 120) respectively arranged in one of an up-stream part and a down-stream part of the screening process.

12. The method according to any of the preceding claims 1-11, wherein the first type of data is indicative of one or more of:
- device (116, 118, 120) characteristics and/or parameters, such as motor power, feeder or conveyor belt speed, water spray flow rates, feed bin gate positions, material sensors, operating characteristics, and
- material processing requirements, such as screening efficiency, material cut size (max size), particle size distribution, moisture content, material discharge speed, material types, material compositions.

13. The method according to any of the preceding claims 1-12, wherein the second type of data is indicative of one or more of:
- particle size distribution, moisture content, particle shape factor, material types & compositions,
- material characteristics, such as screening efficiency, material cut size (max size), particle size distribution, moisture content, material discharge speed, and material types and/or compositions.

14. The method according to any of the preceding claims 1-13, wherein the set of performance metrics comprises any of particle size distribution on screen, feed conditions over screen, process efficiency, material velocity across screen, moisture content, predicted modal analysis, particle shape factor on screen, bed depth, feed bias, particle size distribution bias, motor power, stroke angle, stroke shape, stroke length, and oil quality and condition.

15. The method according to any of the preceding claims, wherein the input data comprises data relating to operation of the screening device, such as screen characteristics and/or operating parameters, such as screen shape and size, stroke angle, G-force, modal shapes and/or frequencies, screen media type, shape, screen aperture size and aperture shape, exciter RPM, water spray flow rates and spray bar locations, exciter oil quality, exciter vibration, exciter temperature, vibration sensors on screen, strain gauges on screen, screen media condition.

16. An apparatus (102) comprising:
at least one processor; and
at least one memory including computer program code,
the at least one memory and the computer program code configured to, with the at least one processor, cause the apparatus at least to perform the method according to any one of the preceding claims 1 to 15.

17. A screening device (118) comprising the apparatus (102) according to claim 16.

18. A computer readable storage medium storing one or more programs, the one or more programs comprising instructions, which when executed by an electronic device cause the electronic device to perform any of the methods according to any one of claims 1 to 15.
